# EUROPEAN PATENT SPECIFICATION

(11) **EP 2 765 287 B1**
(45) Date of publication and mention of the grant of the patent: **08.09.2021**
(21) Application number: 13155525.2
(22) Date of filing: 15.02.2013
(51) Int. Cl.: F02B 63/04, F02B 75/24, B60K 6/24

(54) **Additional power supply apparatus, in particular for electric vehicles or the like**
Zusätzlicher Energieversorger, insbesondere für elektrische Fahrzeuge
Générateur supplémentaire, en particulier pour véhicule électrique

(30) Priority: 11.02.2013 IT MO20130030
(43) Date of publication of application: 13.08.2014
(73) Proprietor: Robby Moto Engineering S.r.l., 26041 Casalmaggiore (CR) (IT)
(72) Inventor: Papetti, Roberto, 26041 Casalmaggiore (CR) (IT); Simonazzi, Giuseppe, 42123 Reggio Emilia (IT)
(74) Representative: Brunacci, Marco

(56) References cited:
- DE-A1-102007 057 597
- DE-A1-102010 024 896
- DE-B- 1 144 055
- GB-A- 2 328 476
- KR-B1- 101 215 404

## Description

The present invention relates to an additional power supply apparatus, in particular for electric vehicles or the like.

The use is known and increasingly more widespread of electric cars, i.e., cars driven by an electric propulsion motor connected to one or more rechargeable electric batteries.

Also known are so-called "hybrid" vehicles wherein the use of an electric motor is combined with that of a further internal combustion engine.

In particular, the so-called "extended range" electric cars use a propulsion system made up of an electric motor connected to one or more electric batteries, wherein battery recharging can be done not only by conventional connection to an external power line, but also by means of a suitable combustion engine installed in the car itself.

The use of the combustion engine to recharge the batteries permits considerably increasing the mileage range of the car, generally limited in the case of cars which are electrically driven only.

In particular, extended-range electric cars comprise an electric propulsion motor of the vehicle, one or more electric batteries connected to the electric motor, a combustion engine, a fuel tank connected to the combustion engine and a power generator coupled to the combustion engine and connected to the electric battery.

The power generator or accumulator is suitable for converting the mechanical energy generated by the combustion engine into electricity for recharging the battery.

The solutions of known type have a number of drawbacks however.

In particular, the combustion engine and the power generator require a specific housing compartment and generally have far from negligible dimensions.

This necessarily requires having to provide, design and make a specific space inside the vehicle suitable for housing the unit made up of the combustion engine and power generator.

This also results in an inevitable reduction in the space at the disposal of users inside the vehicle, e.g., inside the rear loading compartment.

Document DE 10 2010 024896 A1 discloses an electro-dynamic drive unit optionally operated as an electrical generator.

GB 2 328 476 A discloses a hybrid engine for a vehicle with a balanced twin cylinder flat internal combustion engine and a generator connected to the crankshaft.

The main object of the present invention is to provide an additional power supply apparatus, in particular for electric vehicles or the like, having small overall dimensions with respect to solutions of known type.

Another object of the present invention is to provide an additional power supply apparatus, in particular for electric vehicles or the like, which can be simply and quickly installed inside a vehicle.

Another object of the present invention is to provide an additional power supply apparatus according to the features of claim 1, in particular for electric vehicles or the like, which allows to overcome the mentioned drawbacks of the state of the art in the ambit of a simple, rational, easy and effective to use as well as low cost solution.

The above objects are achieved by the present additional power supply apparatus for electric vehicles, installable in an electric vehicle to increase the mileage range, comprising a combustion engine connected to a fuel tank by means of first connection means and electricity generating means suitable for generating electricity starting with the mechanical energy produced by said combustion engine, wherein said combustion engine comprises an engine body having two cylinders, two pistons fitted sliding inside said cylinders, an engine shaft associated with said engine body axially rotatable and operatively connected to said pistons and to said electricity generating means, wherein said cylinders extend from said engine body along respective directions opposite one another, and wherein said engine shaft is at right angles with respect to said cylinders and has two extremities opposite and protruding with respect to said engine body, wherein said electricity generating means comprise two power generators operatively and directly connected to said opposite extremities respectively, of the engine shaft, and connected to an electric battery and/or to an electric propulsion engine of said electric vehicle by means of second connection means, wherein said power generators are arranged on opposite portions with respect to said engine body and extend along respective directions opposite with respect to said engine body and at right angles with respect to said cylinders, and wherein the longitudinal axes of said cylinders and the longitudinal axis of said engine shaft are coplanar the one to the other.

Other characteristics and advantages of the present invention will become more evident from the description of a preferred, but not sole, embodiment of an additional power supply apparatus, in particular for electric vehicles or the like, illustrated purely as an example but not limited to the annexed drawings in which:

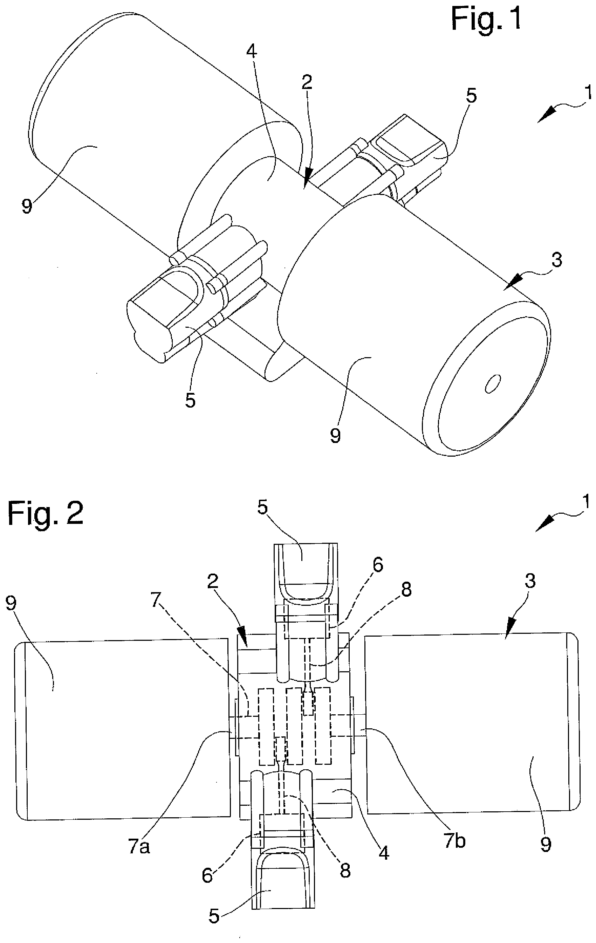

Figure 1 is an axonometric view of the additional power supply apparatus according to the invention;
Figure 2 is a plan view of the additional power supply apparatus according to the invention.

With particular reference to such figures, globally indicated by 1 is an additional power supply apparatus, installable in particular in electric vehicles to increase the mileage range.

In particular, the apparatus 1 permits recharging the batteries of an electric vehicle having an electric motor propulsion system.

If necessary, the apparatus 1 can supply additional energy directly to the electric motor of the vehicle in the event of predefined conditions occurring during the transit of the vehicle itself.

The fact is underlined that, advantageously, the apparatus 1 has much smaller overall dimensions compared to solutions of known type, and can therefore be installed inside a small space in an electric vehicle.

For example, the apparatus 1 can be easily and quickly installed inside a conventional electric vehicle, e.g., in correspondence to the compartment used for the spare wheel, inside the boot of the vehicle itself.

Usefully, the use cannot be ruled out of the apparatus 1 for different applications such as, e.g., generating additional or emergency electricity within the industrial field or inside private homes.

The apparatus 1 comprises a combustion engine 2 and electricity generating means 3 suitable for generating electricity starting with the mechanical energy produced by the combustion engine 2.

Advantageously, the combustion engine 2 is of a boxer engine or opposed cylinder type.

In particular, the combustion engine 2 comprises an engine body 4 having two cylinders 5 extending from the engine body 4 along respective directions substantially opposite one another.

With reference to the particular and preferred embodiment of the apparatus 1 shown in the illustrations, the two cylinders 5 extend from opposite portions of the engine body 4 along directions parallel and coplanar the one to the other. Inside the two cylinders 5, respective pistons 6 are housed sliding and sealed.

The combustion engine 2 also comprises an engine shaft 7 associated with the engine body 4 axially rotatable and operatively connected to the pistons 6 by means of suitable connecting rods 8.

Advantageously, the engine shaft 7 is substantially at right angles with respect to the cylinders 5 and has two extremities 7a and 7b opposite one another and protruding with respect to the engine body 4.

In particular, with reference to the particular and preferred embodiment of the apparatus 1 shown in the illustrations, the longitudinal axis of the engine shaft 7 is at right angles and coplanar with respect to the longitudinal axes of the cylinders 5.

Advantageously, the electricity generating means 3 are made up of two power generators 9 operatively connected to the opposite extremities 7a and 7b, respectively, of the engine shaft 7.

In particular, the power generators 9 are arranged in the proximity of the opposite portions of the engine body 4 and extend along directions substantially at right angles with respect to the cylinders 5.

Usefully, the use of two power generators 9 allows generating, at output, an alternate voltage which, once rectified, is preferably equal to a direct voltage of 396.5 V.

The apparatus 1 comprises first connection means, not shown in the illustrations, suitable for connecting the combustion engine 2 to one or more fuel tanks installed in the electric vehicle.

Usefully, the use cannot be ruled out of different types of fuels such as, e.g., petrol, liquid propane gas, natural gas or alternative fuels such as bio-ethanol or the like.

The apparatus 1 also comprises second connection means, not shown in the illustrations, suitable for connecting the outputs of the power generators 9 to one or more electric batteries installed in the vehicle, for recharging the batteries themselves.

Usefully, the second connection means of the power generators 9 can be suitable for permitting the direct connection to the electric propulsion motor of the electric vehicle, so as to supply additional power directly to the electric motor in the event of predefined conditions occurring during the transit of the vehicle itself.

Usefully, the apparatus 1 comprises an electronic management and control unit, not shown in the illustrations, operatively connected to the combustion engine 2.

In particular, the electronic management and control unit can comprise a first electronic control unit of the power charge, having means for switching the combustion engine 2 on/off according to the remaining battery charge.

The electronic management and control unit can also comprise a second electronic control unit of the combustion engine 2, having means for regulating the speed of the combustion engine 2 according to the remaining battery charge and/or the way the vehicle is driven and/or the type of journey made by the vehicle and/or the type of journey the vehicle has to make.

The implementation of the first and the second unit by means of a single electronic unit suitably connected to the battery, to the power generators 9 and to the combustion engine 2 cannot however be ruled out.

It has in fact been ascertained how the described invention achieves the proposed objects.

In particular, the fact is underlined that the use of the combustion engine of the boxer or opposed cylinder type, together with the use and arrangement of the two power generators connected to the two opposite extremities of the engine shaft, permits obtaining an additional power supply apparatus, usable in particular in electric vehicles or the like, with considerably smaller overall dimensions compared to solutions of known type.

The particular configuration of the apparatus therefore, allows optimizing the performance of the vehicle, ensuring at the same time reduced overall dimensions and weight.

Furthermore, the apparatus according to the invention can be simply and quickly installed inside a conventional electric vehicle, e.g., in correspondence to the compartment used to contain the spare wheel, inside the boot of the vehicle itself.

## Claims

1. Additional power supply apparatus (1) for electric vehicles, installable in an electric vehicle to increase the mileage range, comprising a combustion engine (2) connected to a fuel tank by means of first connection means and electricity generating means (3) suitable for generating electricity starting with the mechanical energy produced by said combustion engine (2), wherein said combustion engine (2) comprises an engine body (4) having two cylinders (5), two pistons (6) fitted sliding inside said cylinders (5), an engine shaft (7) associated with said engine body (4) axially rotatable and operatively connected to said pistons (6) and to said electricity generating means (3), wherein said cylinders (5) extend from said engine body (4) along respective directions opposite one another, and wherein said engine shaft (7) is at right angles with respect to said cylinders (5) and has two extremities (7a, 7b) opposite and protruding with respect to said engine body (4), **characterized in that** said electricity generating means (3) comprise two power generators (9) operatively and directly connected to said opposite extremities (7a, 7b) respectively, of the engine shaft (7), and connected to an electric battery and/or to an electric propulsion engine of said electric vehicle by means of second connection means, wherein said power generators (9) are arranged on opposite portions with respect to said engine body (4) and extend along respective directions opposite with respect to said engine body (4) and at right angles with respect to said cylinders (5), and wherein the longitudinal axes of said cylinders (5) and the longitudinal axis of said engine shaft (7) are coplanar the one to the other.

2. Apparatus (1) according to claim 1, **characterized in that** it comprises an electronic management and control unit operatively connected to said combustion engine (2).

3. Apparatus (1) according to claim 2, **characterized in that** said electronic management and control unit comprises means for switching on/off and/or for regulating the speed of said combustion engine (2) according to the remaining electric charge of said battery and/or the way said vehicle is driven and/or the type of journey made by said vehicle and/or the type of journey said vehicle has to make.

## Patentansprüche

1. Zusätzliche Stromversorgungsvorrichtung (1) für Elektrofahrzeuge, die in ein Elektrofahrzeug einbaubar ist, um die Kilometerreichweite zu erhöhen, umfassend einen Verbrennungsmotor (2), der mittels erster Verbindungsmittel mit einem Kraftstofftank verbunden ist, und Elektrizitätserzeugungsmittel (3), die geeignet sind, Elektrizität ausgehend von der von dem Verbrennungsmotor (2) erzeugten mechanischen Energie zu erzeugen, wobei der Verbrennungsmotor (2) einen Motorkörper (4) mit zwei Zylindern (5), zwei Kolben (6), die gleitend in die Zylinder (5) eingepasst sind, eine Motorwelle (7), die mit dem Motorkörper (4) verbunden ist und axial drehbar und betriebsmäßig mit den Kolben (6) und den Elektrizitätserzeugungsmitteln (3) verbunden ist, umfasst, wobei sich die Zylinder (5) von dem Motorkörper (4) entlang jeweiliger, einander entgegengesetzter Richtungen erstrecken, und wobei die Motorwelle (7) in rechten Winkeln in Bezug auf die Zylinder (5) steht und zwei Enden (7a, 7b) aufweist, die sich gegenüberliegen und in Bezug auf den Motorkörper (4) vorstehen, **dadurch gekennzeichnet, dass** die Elektrizitätserzeugungsmittel (3) zwei Leistungsgeneratoren (9) umfassen, die betriebsmäßig und direkt mit den gegenüberliegenden Enden (7a, 7b) der Motorwelle (7) verbunden sind und mit einer elektrischen Batterie und/oder mit einem elektrischen Antriebsmotor des Elektrofahrzeugs mittels zweiter Verbindungsmittel verbunden sind, wobei die Leistungsgeneratoren (9) an gegenüberliegenden Abschnitten in Bezug auf den Motorkörper (4) angeordnet sind und sich entlang jeweiliger Richtungen erstrecken, die in Bezug auf den Motorkörper (4) entgegengesetzt und in rechten Winkeln in Bezug auf die Zylinder (5) sind, und wobei die Längsachsen der Zylinder (5) und die Längsachse der Motorwelle (7) koplanar zueinander sind.

2. Vorrichtung (1) nach Anspruch 1, **dadurch gekennzeichnet, dass** sie eine elektronische Verwaltungs- und Steuereinheit umfasst, die operativ mit dem Verbrennungsmotor (2) verbunden ist.

3. Vorrichtung (1) nach Anspruch 2, **dadurch gekennzeichnet, dass** die elektronische Verwaltungs- und Steuereinheit Mittel zum Ein-/Ausschalten und/oder zum Regulieren der Drehzahl des Verbrennungsmotors (2) in Abhängigkeit von der verbleibenden elektrischen Ladung der Batterie und/oder der Fahrweise des Fahrzeugs und/oder der Art der Fahrt des Fahrzeugs und/oder der Art der Fahrt, die das Fahrzeug machen muss, umfasst.

## Revendications

1. Appareil (1) d'alimentation électrique supplémentaire pour véhicules électriques, pouvant être installé dans un véhicule électrique pour augmenter l'autonomie, comprenant un moteur à combustion (2) raccordé à un réservoir de carburant au moyen d'un premier moyen de raccordement et un moyen de génération d'électricité (3) apte à générer de l'électricité en commençant par l'énergie mécanique produite par ledit moteur à combustion (2), dans lequel ledit moteur à combustion (2) comprend un corps de moteur (4) ayant deux cylindres (5), deux pistons (6) ajustés en coulissant à l'intérieur desdits cylindres (5), un arbre de moteur (7) associé audit corps de moteur (4) axialement rotatif et fonctionnellement raccordé auxdits pistons (6) et audit moyen de génération d'électricité (3), dans lequel lesdits cylindres (5) s'étendent depuis ledit corps de moteur (4) le long de directions respectives opposées l'une à l'autre, et dans lequel ledit arbre de moteur (7) est à angles droits par rapport auxdits cylindres (5) et a deux extrémités (7a, 7b) opposées et saillantes par rapport audit corps de moteur (4), **caractérisé en ce que** ledit moyen de génération d'électricité (3) comprend deux générateurs électriques (9) respectivement raccordés fonctionnellement et directement auxdites extrémités opposées (7a, 7b) de l'arbre de moteur (7), et raccordés à une batterie électrique et/ou à un moteur de propulsion électrique dudit véhicule électrique au moyen d'un second moyen de raccordement, dans lequel lesdits générateurs électriques (9) sont agencés sur des portions opposées par rapport audit corps de moteur (4) et s'étendent le long de directions respectives opposées par rapport audit corps de moteur (4) et à angles droits par rapport auxdits cylindres (5), et dans lequel les axes longitudinaux desdits cylindres (5) et l'axe longitudinal dudit arbre de moteur (7) sont dans le même plan l'un que l'autre.

2. Appareil (1) selon la revendication 1, **caractérisé en ce qu'**il comprend une unité de gestion et de commande électronique raccordée fonctionnellement audit moteur à combustion (2).

3. Appareil (1) selon la revendication 2, **caractérisé en ce que** ladite unité de gestion et de commande électronique comprend un moyen d'activation/désactivation et/ou de régulation de la vitesse dudit moteur à combustion (2) en fonction de la charge électrique restante de ladite batterie et/ou de la manière selon laquelle ledit véhicule est conduit et/ou du type de trajet effectué par ledit véhicule et/ou du type de trajet que ledit véhicule doit effectuer.
